# EUROPEAN PATENT SPECIFICATION

(11) **EP 3 736 753 B1**
(45) Date of publication and mention of the grant of the patent: **01.01.2025**
(21) Application number: 19173322.9
(22) Date of filing: 08.05.2019
(51) Int. Cl.: G06Q 10/06

(54) **METHOD, FLEET MANAGEMENT DEVICE AND SYSTEM FOR DETERMINING A PREFERRED LOCATION OF A VEHICLE**
VERFAHREN, FLOTTENMANAGEMENTGERÄT UND SYSTEM ZUM BESTIMMEN EINES BEVORZUGTEN STANDORTS EINES FAHRZEUGS
PROCÉDÉ, APPAREIL DE GESTION DE FLOTTES ET SYSTÈME POUR DÉTERMINER L'EMPLACEMENT D'UN VÉHICULE

(43) Date of publication of application: 11.11.2020
(73) Proprietor: Siemens Mobility GmbH, 81739 München (DE)
(72) Inventor: FENECH, Kristian, 1015 Budapest (HU); BALAZS, Gergely György, 1034 Budapest (HU); ZEITLER, Balazs, 1067 Budapest (HU)
(74) Representative: Siemens Patent Attorneys

(56) References cited:
- WO-A1-2019/018695
- US-B1- 9 953 539

## Description

The invention relates to a method, a fleet management device and a fleet management system for determining a preferred location of a vehicle.

With the increasing trend towards urban shared, distributed and on-demand mobility solutions such as present car sharing solutions and future urban air mobility solutions a key problem which needs to be addressed is in how to distribute a fleet throughout the zone of operation in order to maximize the usage of the available fleet.

To be able to maximize this usage the problem of accurately estimating local demand must be solved, independently of the modality of travel.

Prior art means perform such a demand estimation task in simple timeseries forecasting, which intends to only use the previous demand, but without considering other external conditions, which leads to inaccurate and/or not reliable forecasts, with which customers can be discouraged to use such a system.

US9953539B1 discloses a method and system for providing a mobility trace database, in particular to provide on-demand transportation services using an automated fleet dispatcher and the mobility trace database.

The problem to be solved is to improve the performance of demand estimation for a distributed shared mobility system. The problem of the invention is being solved by a method for determining a preferred location of a vehicle as defined in claim 1.

Machine learning (ML) is the scientific study of algorithms and statistical models that computer systems use to effectively perform a specific task without using explicit instructions, relying on patterns and inference instead. It is seen as a subset of artificial intelligence. Machine learning algorithms build a mathematical model based on sample data, known as "training data", in order to make predictions or decisions without being explicitly programmed to perform the task.

The function D(x) is not described deterministically, but though a probabilistic model (such as tree-based methods, deep neural-networks or Gaussian processes) and is learned based on the historic data, e.g. of Table 1.

After the initial training phase conducted on the historical data, the demand estimator D(x) can receive new demand requests with all required information contained in the input x the output of this demand estimator is the predicted demand for that location, given by the value *D̂* and e.g. displayed on the user dashboard for the operator to assess.

Later, the predicted *D̂* value is fed-back into the prediction model alongside the actual value for the demand and can be used to enhance the system for future predictions.

The invention can be further developed as the situation data set comprises data related to at least one selected from the group including traffic information, weather information, event information and public transport information, each accompanying with a respective actual time information and a respective region information.

Thus, parameters having very significant impact on a traffic application can be considered with actual data values.

The advantage of the invention includes improved performance, as the system considers additional variables outside of pure historic information. In addition, the feedback system continuously improves the model over time.

Moreover, the application of a non-model based predictive system for estimating usage demand within a temporal and spatial region enables a very simple, but effective way to improve the forecast behavior.

The invention can be further developed as the historical data set comprises data related to at least one selected from the group including traffic information, weather information, event information and public transport information, each accompanying with a respective time information and a respective region information.

Thus, parameters having very significant impact on a traffic application can be considered with actual data values.

For instance, an integer value of user demand given by the function D(x) can be predicted, where the input *x* is a vector of the relevant features which are given in Table 1.

**Table 1: List of features which determine x to be used in the model training and future prediction**

| **Feature** | **Description** |
|---|---|
| Month | Integer value for the target month at which a booking request is made (1-12]. Obtained from timestamp |
| Day of Week | Encoded value for day of week at which a booking request is made e.g. |
| | O - Sunday, |
| | 1 - Monday |
| | ... |
| | 6 - Saturday |
| | Obtained from a timestamp |
| Hour | Integer value for the hour (0-23) at which a booking request is made. |
| | Obtained from a timestamp |
| Weather Conditions | Weather conditions (temperature, precipitation, wind) in and around the desired region |
| Local Events | Local event(s) in proximity to the desired region |
| Traffic Conditions | Current traffic conditions for the given hour and in proximity to the desired region |
| Public Transport Conditions | Current timetabling and information from public transport operations in proximity to the desired region. |
| Region ID | A predetermined area determined based on either the density of users from historic data, or a prespecified area e.g. 1 km² |

The invention can be further developed as the demand estimator model is based on a machine learning principle, preferably though a probabilistic model, like a tree-based method, a deep neural-network or a Gaussian process.

Thus, a very accurate model can be considered, representing the actual traffic situation for the vehicle, and a respective accurate prediction can be made in a simple manner.

The problem of the invention is also being solved by a fleet management device for determining a preferred location of a vehicle, comprising
- a first capturing means configured to capture a situation data set at the actual time,
- a second capturing means configured to capture a historical data set for a predefined time period excluding the actual time and to calculate from the historical data set a characteristic data set,
- an estimation model processing means configured to setup and train of a demand estimator model using the situation data set and the characteristic data set,
- a third capturing means configured to capture a demand request and to set a demand estimation request,
- an estimation means configured to calculate a demand estimator using the demand estimator model and the demand estimation request, and to calculate the preferred location with location information using the demand estimator,
wherein the fleet management device is configured to incorporate the preferred location into the demand estimator model.

The problem of the invention is also being solved by a fleet management system for determining a preferred location of a vehicle, comprising a fleet management device according to the invention and at least one vehicle with a vehicle device, and further a wireless communication means, which is configured to establish a wireless communication between the calculation device and the vehicle device to communicate the estimated location from the fleet management device to the vehicle device.

The invention can be further developed as the vehicle device is a navigation device, and the system is configured to execute a further step of setting a target location of the navigation device to a location corresponding to the location information of the preferred location.

The invention can be further developed as the at least one vehicle is part of a fleet with a multiplicity of vehicles, which the system comprises, and actual and/or historical locations of the at least one vehicle are considered in the demand estimator model.

The invention can be further developed as statistical representations of actual and/or historical locations of the at least one vehicle are/is considered in the demand estimator model.

The invention will be explained in more detail with reference to an exemplary embodiment shown in the attached drawings. In the drawings show in:
- Fig. 1: a schematic illustration of the principle of the invention,
- Fig. 2: an embodiment of a block diagram according to the invention.

It is clear, that further not shown parts are necessary for the operation of a system, e.g. electronic control components, data storage devices or other computing equipment. For the sake of better understanding these parts are not illustrated and described.

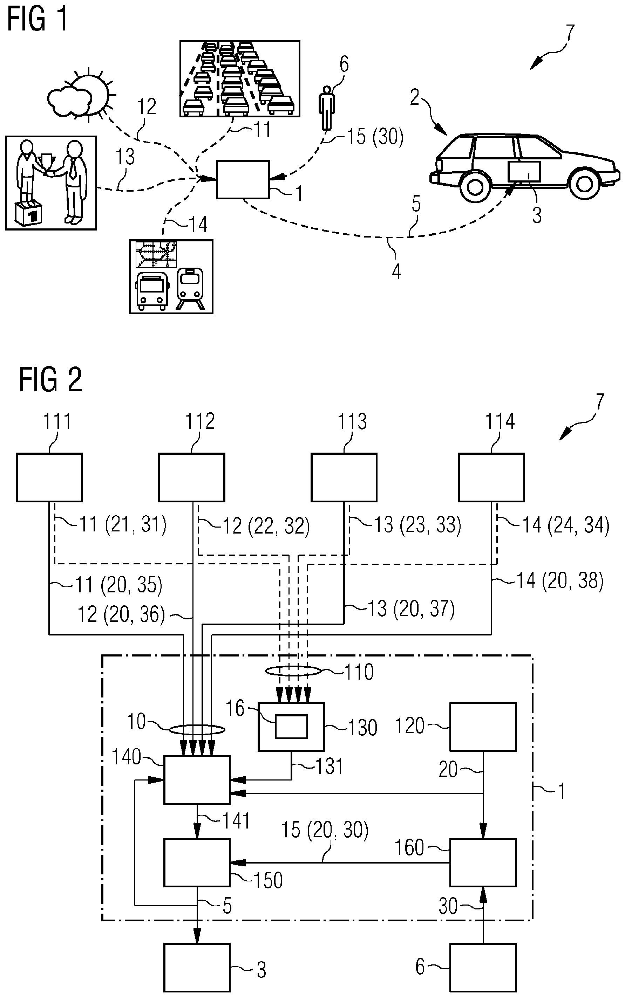

**Fig. 1** shows a sketch with a schematic illustration of the principle of the invention with a fleet management system 7 for determining a preferred location 5 of a vehicle 2.

The fleet management system 7 comprises a fleet management device 1 according to the invention and at least one vehicle 2 with a vehicle device 3.

The fleet management system 7 captures situation data and historical data including traffic information 11, weather information 12, event information 13 and public transport information 14, each accompanying with a respective actual time information and a respective region information.

Further, the fleet management system 7 comprises a wireless communication means 4, which is configured to establish a wireless communication between the calculation device 1 and the vehicle device 3 to communicate the estimated location 5 from the fleet management device 1 to the vehicle device 3.

The fleet management system 7 captures a demand estimation request 15, e.g. manually or automatically from an operator.

**Fig. 2** shows an embodiment of a block diagram according to the invention.

The invention provides a method for determining a preferred location 5 of a vehicle 2, comprising following steps:
a) capturing a situation data set 10 at the actual time 20,
b) capturing a historical data set 110 for a predefined time period excluding the actual time 20 and calculating from the historical data set 110 a characteristic data set 131,
c) setup and training of a demand estimator model 141 using the situation data set 10 and the characteristic data set 131,
d) capturing a demand estimation request 15,
e) calculating a demand estimator using the demand estimator model 141 and the demand estimation request 15,
f) estimating the preferred location 5 with location information using the demand estimator,
g) incorporating the preferred location 5 into the demand estimator model 141.

The situation data set 10 comprises data related to traffic information 11, weather information 12, event information 13 and public transport information 14, each accompanying with a respective actual time information 20 and a respective region information 35-38.

Thus, actual data within the situation data set 10 with traffic information 11(20, 35), weather information 12(20, 36), event information 13(20, 37) and public transport information 14(20, 38) at respective, predefined locations 35-38 are provided.

The historical data set 110 comprises data related to traffic information 11, weather information 12, event information 13 and public transport information 14, each accompanying with a respective time information 21-24 and a respective region information 31-34.

Thus, historic data within the historical data set 110 with traffic information 11(21, 31), weather information 12(22, 32), event information 13(23, 33) and public transport information 14(24, 34) with respective timestamps 21-24 at respective, predefined locations 31-34 are provided by respective information collection devices 111-114.

It is clear, that the term "actual time" 20 covers a certain time period just before the actual moment e.g. in order to enable computer calculations at the execution of the method of the invention or to cover transmission delays of respective situation data. For instance, the actual time 20 can be e.g. the actual local time with reference to UTC (Universal Time Coordinated), including the past five or ten or 30 minutes, generated by a time base device 120.

The demand estimator model 141 is based on a machine learning principle, preferably though a probabilistic model, like a tree-based method, a deep neural-network or a Gaussian process.

Fig. 2 shows also the building block of a fleet management device 1 for determining the preferred location 5 of the vehicle 2, comprising
- a first capturing means 111-114 configured to capture the situation data set 10 at the actual time 20,
- a second capturing means 130 configured to capture the historical data set 110 for a predefined time period excluding the actual time 20 and to calculate from the historical data set 110 a characteristic data set 131,
- an estimation model processing means 140 configured to setup and train of a demand estimator model 141 using the situation data set 10 and the characteristic data set 131,
- a third capturing means 160 configured to capture a demand request and to set a demand estimation request 15,
- an estimation means 150 configured to calculate a demand estimator using the demand estimator model 141 and the demand estimation request 15, and to calculate the preferred location 5 with location information using the demand estimator,
wherein the fleet management device 1 is configured to incorporate the preferred location 5 into the demand estimator model 141.

The first capturing means 111-114 can be a data service via internet or measured data from dedicated sensors, e.g. temperature sensors, video sensors for sensing traffic flow or data from electronic toll collection systems. Location and actual time information is added to each data sample.

The second capturing means 130 can be a data aggregator from historic data, using previous actual data e.g. manipulated by statistical methods. Location and related time information is added to each data sample.

The estimation model processing means 140 can be for instance a computing device or a service in the cloud.

The third capturing means 160 can manually by an operator 6 or automatically capture a request 15 and adds the actual time information 20 and location information 30 to define a demand estimation request 15.

The fleet management system 7, e.g. for a car rental fleet, for determining the preferred location 5 of the vehicle 2 can be defined, comprising a fleet management device 1 and at least one vehicle 2 with a vehicle device 3, and further a wireless communication means 4, which is configured to establish a wireless communication between the calculation device 1 and the vehicle device 3 to communicate the estimated location 5 from the fleet management device 1 to the vehicle device 3.

The vehicle device 3 is a navigation device, and the system is configured to execute a further step of setting a target location of the navigation device to a location corresponding to the location information of the preferred location 5. Thus, the preferred location 5 can be set for a driver of the vehicle 2 by setting a target point within the navigation device 3, e.g. to manage the rental-return of the vehicle 2, which is part of a rental fleet.

The system 7 comprises the at least one vehicle 2 is part of a fleet with a multiplicity of vehicles and actual and/or historical locations of the at least one vehicle 2 are considered in the demand estimator model 141. The fleet can be a fleet of vehicles for a shared mobility system.

The statistical representations of actual and/or historical locations of the at least one vehicle 2 are considered in the demand estimator model 141 as a feedback loop.

### List of reference numerals:

- 1: estimation device
- 2: vehicle
- 3: vehicle device, e.g. navigation device
- 4: wireless communication path
- 5: estimated location
- 6: demand request, e.g. by operator
- 7: requesting system
- 10: situation data set
- 11: traffic information
- 12: weather information
- 13: event information
- 14: public transport information
- 15: demand request
- 20: actual time information
- 21-28: time information
- 30-38: region information
- 110: historical data set
- 111: traffic information collection device
- 112: weather information collection device
- 113: event information collection device
- 114: public transport information collection device
- 120: time base device
- 130: historical data aggregator
- 131: characteristic data set
- 140: demand estimator model training device
- 141: demand estimator model
- 150: demand estimator calculator device
- 160: demand request device

## Claims

1. Computer-implemented method for determining a preferred location (5) of a vehicle (2) with a navigation device (3), comprising following steps:
a) capturing a situation data set (10) at an actual time (20) and a respective location (35-38) by a first capturing means (111-114),
b) capturing a historical data set (110) for a predefined time period, excluding the actual time (20), at respective locations (31-34) and calculating from the historical data set (110) a characteristic data set (131) by a second capturing means (130),
c) setup and training of a demand estimator model (141) using the situation data set (10) and the characteristic data set (131) by an estimation model processing means (140),
d) capturing a demand estimation request (15) by a third capturing means (160),
e) calculating a demand estimator using the demand estimator model (141) and the demand estimation request (15) by a computer,
f) estimating the preferred location (5) with location information using the demand estimator by the computer,
g) incorporating the preferred location (5) into the demand estimator model (141) by the computer
h) communicate the preferred location (5) by a wireless communication means to the vehicle with the navigation device (3),
i) setting a target location of the navigation device (3) to a location corresponding to the location information of the preferred location (5).

2. Method according to the preceding claim, wherein the situation data set (10) comprises data related to at least one selected from the group including traffic information (11), weather information (12), event information (13), public transport information (14) and demand information (16), each accompanying with a respective actual time information (20) and a respective region information (35-38).

3. Method according to one of the preceding claims, wherein the historical data set (110) comprises data related to at least one selected from the group including traffic information (11), weather information (12), event information (13), public transport information (14) and demand information (16), each accompanying with a respective time information (21-24) and a respective region information (31-34) .

4. Method according to one of the preceding claims, wherein the demand estimator model (141) is based on a machine learning principle, preferably though a probabilistic model, like a tree-based method, a deep neural-network or a Gaussian process.

5. Method according to one of the preceding claims, wherein the predefined time period corresponds to a demand request at the respective time (21-24).

## Patentansprüche

1. Computergestütztes Verfahren zum Bestimmen eines bevorzugten Standorts (5) eines Fahrzeugs (2) mit einer Navigationsvorrichtung (3), das folgende Schritte umfasst:
a) Erfassen eines Situationsdatensatzes (10) zu einer Ist-Zeit (20) und an einem jeweiligen Standort (35-38) über ein erstes Erfassungsmittel (111-114),
b) Erfassen eines Bestandsdatensatzes (110) für einen vorgegebenen Zeitraum außer der Ist-Zeit (20) an jeweiligen Standorten (31-34) und Berechnen eines typischen Datensatzes (131) aus dem Bestandsdatensatz (110) über ein zweites Erfassungsmittel (130),
c) Einrichten und Trainieren eines Bedarfsschätzwertmoduls (141) unter Verwendung des Situationsdatensatzes (10) und des typischen Datensatzes (131) über ein Schätzmodellverarbeitungsmittel (140),
d) Erfassen einer Bedarfsschätzungsanfrage (15) über ein drittes Erfassungsmittel (160),
e) Berechnen eines Bedarfsschätzwerts mithilfe des Bedarfsschätzwertmodells (141) und der Bedarfsschätzungsanfrage (15) über einen Computer,
f) Schätzen des bevorzugten Standorts (5) mit Standortinformationen unter Verwendung des Bedarfsschätzwerts über den Computer,
g) Einbeziehen des bevorzugten Standorts (5) in das Bedarfsschätzwertmodell (141) über den Computer,
h) Übermitteln des bevorzugten Standorts (5) über ein Drahtloskommunikationsmittel an das Fahrzeug mit der Navigationsvorrichtung (3),
i) Einstellen eines Zielstandorts für die Navigationsvorrichtung (3) auf einen Standort, der den Standortinformationen zu dem bevorzugten Standort (5) entspricht.

2. Verfahren nach dem vorhergehenden Anspruch, wobei der Situationsdatensatz (10) Daten umfasst, die mindestens eines der Elemente betreffen, welche aus der Gruppe ausgewählt sind, die Verkehrsinformationen (11), Wetterinformationen (12), Ereignisinformationen (13), Informationen (14) zum öffentlichen Personennahverkehr und Bedarfsinformationen (16) umfasst, wobei zu jedem davon eine jeweilige Ist-Zeitangabe (20) und eine jeweilige Regionsangabe (35-38) gehört.

3. Verfahren nach einem der vorhergehenden Ansprüche, wobei der Bestandsdatensatz (110) Daten umfasst, die mindestens eines der Elemente betreffen, welche aus der Gruppe ausgewählt sind, die Verkehrsinformationen (11), Wetterinformationen (12), Ereignisinformationen (13), Informationen (14) zum öffentlichen Personennahverkehr und Bedarfsinformationen (16) umfasst, wobei zu jedem davon eine jeweilige Zeitangabe (21-24) und eine jeweilige Regionsangabe (31-34) gehört.

4. Verfahren nach einem der vorhergehenden Ansprüche, wobei das Bedarfsschätzwertmodell (141) auf einem Maschinenlernprinzip, jedoch vorzugsweise einem probabilistischen Modell wie einem baumbasierten Verfahren, einem tiefen neuronalen Netz oder einem Gauß-Prozess basiert.

5. Verfahren nach einem der vorhergehenden Ansprüche, wobei der vorgegebene Zeitraum einer Bedarfsanfrage zu der jeweiligen Zeit (21-24) entspricht.

## Revendications

1. Procédé mis en œuvre par ordinateur pour déterminer un emplacement préféré (5) d'un véhicule (2) comportant un dispositif de navigation (3), comprenant les étapes suivantes :
a) saisie d'un ensemble de données de situation (10) à un moment réel (20) et un emplacement respectif (35-38) par un premier moyen de saisie (111-114),
b) saisie d'un ensemble de données historiques (110) pour une période de temps prédéfinie, en excluant le moment réel (20), à des emplacements respectifs (31-34) et calcul à partir de l'ensemble de données historiques (110) d'un ensemble de données caractéristiques (131) par un deuxième moyen de saisie (130),
c) mise en place et formation d'un modèle estimateur de demande (141) utilisant l'ensemble de données de situation (10) et l'ensemble de données caractéristiques (131) par un moyen de traitement du modèle d'estimation (140),
d) saisie d'une requête d'estimation de demande (15) par un troisième moyen de saisie (160),
e) calcul d'un estimateur de demande utilisant le modèle estimateur de demande (141) et la requête d'estimation de demande (15) par un ordinateur,
f) estimation de l'emplacement préféré (5) avec des informations d'emplacement utilisant l'estimateur de demande par l'ordinateur,
g) intégration de l'emplacement préféré (5) dans le modèle estimateur de demande (141) par l'ordinateur
h) communication de l'emplacement préféré (5) par un moyen de communication sans fil au véhicule comportant le dispositif de navigation (3),
i) établissement d'un emplacement cible du dispositif de navigation (3) à un emplacement correspondant aux informations d'emplacement de l'emplacement préféré (5).

2. Procédé selon la revendication précédentes, dans lequel l'ensemble de données de situation (10) comprend des données liées à au moins une information choisie dans le groupe incluant des informations de circulation (11), des informations météorologiques (12), des informations d'évènements (13), des informations de transports publics (14) et des informations de demandes (16), chacune étant accompagnée d'informations de moment réel respectif (20) et d'informations de région respective (35-38).

3. Procédé selon l'une quelconque des revendications précédentes, dans lequel l'ensemble de données historiques (110) comprend des données liées à au moins une information choisie dans le groupe incluant des informations de circulation (11), des informations météorologiques (12), des informations d'évènements (13), des informations de transports publics (14) et des informations de demandes (16), chacune étant accompagnée d'informations de moment respectif (21-24) et d'informations de région respective (31-34).

4. Procédé selon l'une quelconque des revendications précédentes, dans lequel le modèle estimateur de demande (141) est basé sur un principe d'apprentissage automatique, de préférence par un modèle probabiliste, comme un modèle arborescent, un réseau neuronal profond ou un processus gaussien.

5. Procédé selon l'une quelconque des revendications précédentes, dans lequel la période de temps prédéfinie correspond à une requête de demande au moment respectif (21-24).
